# EUROPÄISCHE PATENTSCHRIFT

(11) **EP 1 905 978 B1**
(45) Veröffentlichungstag und Bekanntmachung des Hinweises auf die Patenterteilung: **27.01.2016**
(21) Anmeldenummer: 07017147.5
(22) Anmeldetag: 31.08.2007
(51) Int. Cl.: F02B 29/04, F02B 37/013, F01P 7/14, F01P 7/16

(54) **Kühlsystem einer aufgeladenen Brennkraftmaschine mit Ladeluftkühler**
Cooling system for a charged combustion engine with a charge-air cooler
Système de refroidissement d'un moteur à combustion interne chargé doté d'un refroidisseur d'air de suralimentation

(30) Priorität: 20.09.2006 DE 102006044820
(43) Veröffentlichungstag der Anmeldung: 02.04.2008
(73) Patentinhaber: MAN Truck & Bus Österreich AG, 4400 Steyr (AT)
(72) Erfinder: Raab, Gottfried, 4320 Perg (AT); Kislinger, Peter, 4040 Linz (AT); Klinger, Heidrun, 4400 Steyr (AT)

(56) Entgegenhaltungen:
- EP-A2- 1 342 893
- WO-A1-2004/090303
- WO-A1-2005/012707
- WO-A1-2005/061869
- DE-A1- 10 215 262

## Beschreibung

Die Erfindung betrifft ein Verfahren sowie ein System zum Kühlen einer Brennkraftmaschine mit Ladeluftzufuhr, das über einen ersten und einen zweiten Kühlkreislauf verfügt, von denen der erste Kühlkreislauf auf einem höheren Temperaturniveau als der zweite Kühlkreislauf betrieben wird und bei dem die Ladeluftzufuhr zumindest eine Ladeluftkühleinheit aufweist, die thermisch an den zweiten Kühlkreislauf, in dem ein Kühlmitteldurchsatz regelbar ist, gekoppelt ist.

Moderne Brennkraftmaschinen, insbesondere Dieselmotoren, verfügen üblicherweise über eine Ladeluftkühlung, mittels der die für die Aufladung der Brennkraftmaschine benötigte Luft abgekühlt wird. Eine Ladeluftkühlung wird hierbei einerseits aufgrund der Aufheizung des Turboladers durch die Abgase des Motors benötigt. Die vorgenannte Aufheizung wird durch die gemeinsame Anordnung der Turbine und des Verdichters auf einer Welle und den damit verbundenen thermischen Kontakt der beiden Gehäuse verursacht. Augrund dieses thermischen Kontakts wird letztendlich eine Wärmeübertragung vom Abgasturbolader auf den Ladeluftverdichter verursacht.

Andererseits ist zu berücksichtigen, dass die durch den Ladeluftverdichter angesaugte Luft üblicherweise auf eine Temperatur von etwa 180 °C oder bei einer zweistufigen Verdichtung auf eine noch höhere Temperatur erwärmt wird. Mit der steigenden Temperatur dehnt sich die angesaugte Ladeluft aus, wodurch eine Verringerung des Sauerstoffanteils je Volumeneinheit bewirkt wird. Diese Verringerung des Sauerstoffanteils bedingt eine geringere Leistungssteigerung des Motors. Um diesem Effekt entgegenzuwirken, werden insbesondere bei Kraftfahrzeugmotoren die eingangs erwähnten Ladeluftkühler auch verwendet. Der Einsatz eines Ladeluftkühlers stellt sicher, dass die aufgeheizte Luft heruntergekühlt und dadurch dem Verbrennungsvorgang im Zylinder eine höhere Ladungsdichte zur Verfügung gestellt wird. Durch den höheren Sauerstoffgehalt der Ladeluft pro Volumeneinheit ist es somit möglich, eine größere Kraftstoffmenge zu verbrennen. Dies führt zu einer nochmaligen Leistungssteigerung, die etwa 30 % betragen kann. Gleichzeitig wird durch die Ladeluftkühlung die Stickoxidemission reduziert, da aufgrund der geringeren Ladelufteintrittstemperatur auch niedrigere Verbrennungstemperaturen erzielt werden.

In diesem Zusammenhang ist aus der DE 102 46 807 A1 ein Kühlsystem für Brennkraftmaschinen mit indirekter Ladeluftkühlung bekannt. Bei dem beschriebenen Kühlsystem sind in einem Kühlkreislauf zwei luftgekühlte Wärmeübertrager sowie ein Ladeluftkühler vorgesehen. Das Kühlsystem verfügt hierbei über einen Aggregatkühlkreislauf zur Kühlung eines Verbrennungsmotors, der einen Hauptkühlkreislauf mit Hauptkühlmittelkühler und einen Zusatzkühlkreislauf zur Kühlung eines Zusatzmediums umfasst. Der Zusatzkühlkreislauf zweigt an einer Auskoppelstelle vom Hauptkühlkreislauf ab und führt zu diesem an einer Einkoppelstelle, die zwischen dem Hauptkühlmittelkühler und einer Kühlmittelförderpumpe angeordnet ist, zurück. Zusätzlich zu den beiden vorgenannten Kühlern ist ein Ladeluftkühler vorgesehen, mit dem die der Brennkraftmaschine zugeführte Ladeluft gekühlt wird. Wesentlich an der beschriebenen technischen Lösung ist, dass die Kühlkreisläufe auf unterschiedlichen Temperaturniveaus betreibbar sind und die Kühlmittelförderpumpe hinsichtlich des zu fördernden Volumenstroms, der Förderleistung und/oder des Förderdrucks verstellbar ist.

In Ergänzung zu der zuvor zitierten Veröffentlichung ist bspw. aus der DE 10 2006 010 247 ein Kühlsystem für aufgeladene Kraftfahrzeugmotoren bekannt, bei dem die Ladeluftkühleinheit einen Ladeluftzwischen- und einen Ladelufthauptkühler aufweist. Da die Ladeluft in diesem Fall zweistufig verdichtet wird, wird mit dem Ladeluftzwischenkühler die Ladeluft zwischen dem Niederdruckverdichter und dem Hochdruckverdichter gekühlt, während der Ladelufthauptkühler die Ladeluft abkühlt, die den Hochdruckverdichter verlassen hat.

Nachteilig an den zuvor beschriebenen Systemen ist, dass der jeweils auf einem niedrigeren Temperaturniveau betriebene Kühlkreislauf, in den bspw. auch die Ladeluftkühler eingekoppelt sind, in allen Betriebszuständen mit einem Kühlmittel beaufschlagt wird, so dass die entsprechenden Motorkomponenten während des Betriebs der Brennkraftmaschine zu jeder Zeit gekühlt werden. Unabhängig vom Mindestkühlmitteldurchsatz im Niedertemperaturkühlkreislauf gibt es jedoch Betriebszustände der Brennkraftmaschine, wie etwa die Startphase oder bestimmte Phasen zur Regeneration von Abgasnachbehandlungskomponenten, in denen eine erhöhte Temperatur benötigt wird.

In der DE 102 15 262 A1 ist ein Kühlsystem für einen Kraftfahrzeugmotor mit indirekter Ladeluftkühlung beschrieben. Das Kühlsystem umfasst einen Aggregatkühlkreislauf und einen Zusatzkühlkreislauf. Im Kühlsystem sind Mittel zur Kühlmitteltemperaturerfassung und zur Regulierung des Kühlmittelflusses vorgesehen.

Aus der WO 2005/061869 A1 ist eine Kreislaufanordnung zur Kühlung von Ladeluft bekannt. Am Kühlmittelaustritt eines Ladeluft-Kühlmittelkühlers oder kurz danach ist ein TemperaturSensor zur Messung der Kühlmittelaustritts-Temperatur vorgesehen.

Die WO 2004/090303 A1 beschreibt eine Kreislaufanordnung zur Kühlung von Ladeluft mit einem Niedertemperatur-Kreislauf und einem Motorkühl-Kreislauf. Der Niedertemperatur-Kreislauf ist mit dem Motor-Kreislauf derart zeitweise koppelbar, dass Kühlmittel von einem Kreislauf in den anderen Kreislauf und zurück gelangen kann.

In der WO 2005/012707 A1 ist eine Kreislaufanordnung zur Kühlung von Ladeluft bei einem Kraftfahrzeug beschrieben. In der Kreislaufanordnung ist eine zweistufige Verdichtung der Ladeluft vorgesehen, wobei zur Kühlung der Ladeluft nach einem Niederdruck-Turbolader und vor einem Hochdruck-Turbolader ein erster Kühler und nach dem Hochdruck-Turbolader und vor dem Motor ein zweiter Kühler vorgesehen ist.

Der Erfindung liegt die Aufgabe zugrunde, ein Kühlsystem für eine aufgeladene Brennkraftmaschine zu schaffen, bei dem in bestimmten, auswählbaren Betriebszuständen das durch den Mindestdurchsatz des Kühlmittels im Niedertemperaturkühlkreislauf verursachte Auskühlen der Brennkraftmaschine zuverlässig verhindert wird. Hierbei sollen insbesondere Warmlaufphasen der Brennkraftmaschine verkürzt sowie auch innerhalb kürzester Zeit eine zeitweise Anhebung des Ladelufttemperatumiveaus, vor allem in Hinblick auf bestimmte Regenerationsstrategien von Abgasnachbehandlungskomponenten erreicht werden. Das anzugebende Kühlsystem soll vor allem regelungstechnisch verhältnismäßig einfach gestaltet sein und auch eine kurzfristige Reaktion auf Veränderungen der Betriebsparameter der Brennkraftmaschine, eines nachgeschalteten Abgasbehandlungssystems und/oder der Zustandsgrößen in den Kühlkreisläufen ermöglichen.

Die vorstehend genannte Aufgabe wird mit Hilfe eines Kühlsystems, das über die im Patentanspruch 1 angegebenen Merkmale verfügt, gelöst. Darüber hinaus ist im Anspruch 5 ein Verfahren, mit dem die der Erfindung zugrunde liegende Aufgabe gelöst wird, angegeben. Vorteilhafte Ausführungsformen der Erfindung sind Gegenstand der abhängigen Ansprüche und werden in der Beschreibung unter Bezugnahme auf die Figuren näher erläutert.

Gemäß Anspruch 1 ist ein Kühlsystem einer Brennkraftmaschine mit Ladeluftzufuhr vorgesehen, das über einen ersten und einen zweiten Kühlkreislauf verfügt, von denen der erste Kühlkreislauf auf einem höherem Temperatumiveau als der zweite Kühlkreislauf betrieben wird und bei dem die Ladeluftzufuhr zumindest eine Ladeluftkühleinheit aufweist, die thermisch an den zweiten, einen regelbaren Kühlmitteldurchsatz aufweisenden Kühlkreislauf gekoppelt ist. Erfindungsgemäß ist im zweiten Kühlkreislauf wenigstens ein Abschaltelement vorgesehen, mit dem während eines Betriebs der Brennkraftmaschine in Abhängigkeit eines Betriebsparameters oder einer Zustandsänderung wenigstens einer Fahrzeugkomponente der Kühlmitteldurchsatz im zweiten Kühlkreislauf auf Null drosselbar, also abschaltbar ist, wobei die Fahrzeugkomponente ein Abgasnachbehandlungssystem ist.

Die zuvor beschriebene Erfindung zeichnet sich somit insbesondere dadurch aus, dass der Kühlmitteldurchsatz im Niedertemperaturkreislauf in Abhängigkeit von auswählbaren bzw. in einer zentralen Steuereinheit hinterlegbarer Betriebsparameter oder Zustandsänderungen eines Abgasnachbehandlungssystems vollständig abschaltbar ist. Mit einem Kühlsystem, das gemäß der Erfindung ausgeführt ist, ist es möglich, auch während des Betriebs der Brennkraftmaschine den ansonsten üblichen Kühlmittelmindestdurchsatz im Niedertemperaturkreislauf in Abhängigkeit eines vorgebbaren, betriebsspezifischen Entscheidungskriteriums zumindest zeitweise vollständig abzuschalten. Auf diese Weise wird in bestimmten Betriebszuständen, die vorab festgelegt sind, das ansonsten durch den Mindestkühlmitteldurchsatz verursachte Auskühlen des Motors sowie bestimmter thermisch an den Niedertemperaturkreislauf gekoppelter Komponenten eines Abgasnachbehandlungssystems zuverlässig unterbunden.

In einer vorteilhaften Ausführungsform der Erfindung wird das Kühlsystem mit einer zweistufigen Ladeluftverdichtung kombiniert. Diese technische Lösung zeichnet sich dadurch aus, dass die Ladeluftzufuhr über ein Niederdruck- und einen Hochdruckverdichter und die Ladeluftkühleinheit über einen Ladeluftzwischen- sowie einen Ladelufthauptkühler verfügt. Der Ladeluftzwischenkühler ist in Strömungsrichtung der Ladeluft zwischen den Niederdruck- und den Hochdruckverdichter geschaltet, während der Ladelufthauptkühler dem Hochdruckverdichter nachgeschaltet ist. In diesem Zusammenhang ist es vorteilhafterweise denkbar, dem Ladeluftzwischenkühler und/oder dem Ladelufthauptkühler im Niedertemperaturkühlkreislauf ein Thermostatventil nachzuschalten, so dass der Kühlmitteldurchsatz durch die beiden Kühler in Abhängigkeit der im zweiten Kühlkreislauf in Strömungsrichtung des Kühlmittels hinter den Ladeluftkühlern auftretenden Temperatur oder Temperaturen regelbar ist.

Weiterhin sieht eine vorteilhafte Weiterbildung vor, dass das im zweiten Kühlkreislauf vorgesehene Abschaltelement über ein Überdruckventil verfügt. Mit Hilfe des vorbeschriebenen Überdruckventils wird in den zweiten Kühlkreislauf eine Druckbegrenzungsfunktion integriert, so dass bei Bedarf insbesondere der luftgekühlte Niedertemperaturwärmeübertrager, also der Wärmeübertrager, über den Wärme aus dem zweiten Kühlkreislauf an die Umgebung übertragen wird, vor unzulässigen Druckspitzen geschützt wird.

Neben dem zuvor beschriebenen Kühlsystem betrifft die Erfindung auch ein Verfahren zum Kühlen einer Brennkraftmaschine. Hierbei wird die Brennkraftmaschine über eine Ladeluftzufuhr mit Ladeluft aufgeladen und das Kühlmittel wird in einem ersten und einem zweiten Köhlmittelkreislauf umgewälzt. Der erste Kühlkreislauf wird auf einem höheren Temperatumiveau als der zweite Kühlkreislauf betrieben und die Ladeluftzufuhr weist zumindest eine Ladeluftkühleinheit auf, wobei die Wärme aus der Ladeluft an den zweiten Kühlkreislauf übertragen wird, dessen Kühlmitteldurchsatz vorzugsweise in Abhängigkeit fahrzeugspezifischer Betriebsparameter geregelt wird. Das erfindungsgemäß ausgeführte Verfahren zeichnet sich dadurch aus, dass während eines Betriebs der Brennkraftmaschine in Abhängigkeit eines Betriebsparameters oder einer Zustandsänderung einer Fahrzeugkomponente und/oder anderer Einflussgrößen der Kühlmitteldurchsatz im zweiten Kühlkreislauf auf Null gedrosselt, also abgeschaltet wird, wobei der Kühlmitteldurchsatz in Abhängigkeit zumindest einer Komponente eines Abgasnachbehandlungssystems abgeschaltet wird.

Im Weiteren wird die Erfindung unter Bezugnahme auf die Figuren näher erläutert.

Es zeigen:
- Fig. 1:: Kühlsystem mit Hoch- sowie Niedertemperaturkühlkreislauf und einem Abschaltelement im Niedertemperaturkühlkreislauf;
- Fig. 2:: Kühlsystem mit Hoch- sowie Niedertemperaturkühlkreislauf ohne Abschaltelement im Niedertemperaturkühlkreislauf.

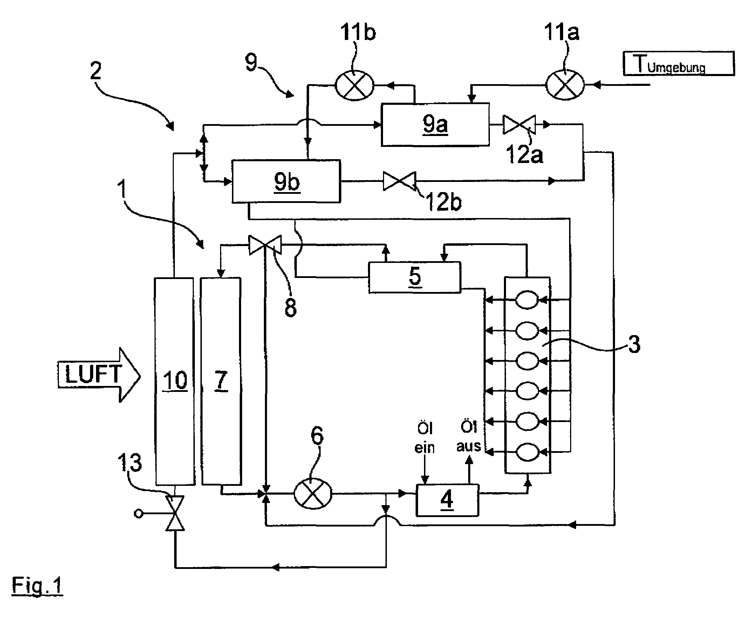

Die Figur 1 zeigt ein erfindungsgemäß ausgeführtes Kühlsystem mit einem ersten als Hochtemperaturkreislauf ausgelegten Kühlkreislauf 1 und einem zweiten als Niedertemperaturkreislauf ausgelegten Kühlkreislauf 2. Bei dem dargestellten Ausführungsbeispiel eines Kraftfahrzeugkühlsystems, wie es bspw. in modernen Nutzfahrzeugen, insbesondere in Lastkraftwagen und Omnibussen, zum Einsatz kommt, sind in den Hochtemperaturkühlkreislauf 1 eine Brennkraftmaschine 3, ein Olwärmetauscher 4, ein Abgaswärmetauscher 5, eine Kühlmittelpumpe 6 und ein luftgekühlter Hochtemperaturwärmeübertrager 7 hydraulisch und thermisch eingebunden. Über das im ersten Kühlkreislauf 1, also dem Hochtemperaturkühlkreislauf, geförderte Kühlmedium wird Wärme aus den vorgenannten Fahrzeugkomponenten abgeführt und über den Hochtemperaturwärmeübertrager 7 an die Umgebungsluft übertragen.

Innerhalb des ersten Kühlkreislaufes 1 ist ein Thermostat 8 vorgesehen, das den Kühlmitteldurchfluss durch den Hochtemperaturwärmeübertrager regelt. Des Weiteren verfügt das in Figur 1 dargestellte Kühlsystem über einen zweiten als Niedertemperaturkreislauf ausgeführten Kühlkreislauf 2, in den zunächst eine Ladeluftkühleinheit 9 sowie ein luftgekühlter Niedertemperaturwärmeübertrager 10 thermisch und hydraulisch eingebunden sind. In diesem zweiten Kühlkreislauf 2 wird das Kühlmittel während des Betriebs der Brennkraftmaschine 3 auf eine Temperatur deutlich unter der Kühlmitteltemperatur im Kühlkreislauf 1 abgekühlt.

Um eine optimale Aufladung der Brennkraftmaschine 3 zu realisieren, ist eine zweistufige Verdichtung 11 der Ladeluft vorgesehen, die über einen Niederdruckverdichter 11a und einen Hochdruckverdichter 11 b verfügt. Die Kühlung der Ladeluft erfolgt mittels der Ladeluftkühleinheit 9, die einen Ladeluftzwischenkühler 9a und einen Ladelufthauptkühler 9b aufweist. Hydraulisch sind der Ladeluftzwischen- 9a und der Ladelufthauptkühler 9b parallel in den zweiten Kühlkreislauf 2 eingebunden und kühlen die Ladeluft indem die den Niederdruckverdichter 11a verlassende Ladeluft den Ladeluftzwischenkühler 9a und die den Hochdruckverdichter 11 b verlassende Ladeluft den Ladelufthauptkühler 9b durchströmt.

Im zweiten Kühlkreislauf 2 ist dem Ladeluftzwischen- 9a und dem Ladelufthauptkühler hydraulisch jeweils ein Thermostatregelventil 12a, 12b nachgeschaltet, über die die Aufteilung des Kühlmitteldurchsatzes innerhalb der Ladeluftkühleinheit regelbar ist.

Ferner ist dem luftgekühlten Niedertemperaturwärmeübertrager 10 in Strömungsrichtung des Kühlmittels im zweiten Kühlkreislauf 2 ein Ventil vorgeschaltet, das als Abschaltelement 13 ausgeführt ist. In Abhängigkeit eines Betriebsparameters oder einer Zustandsänderung einer durch ein Abgasnachbehandlungssystem gebildeten Fahrzeugkomponente kann eine Abschaltung des Kühlmitteldurchsatzes realisiert werden. Auf diese Weise kann der Mindestdurchsatz, etwa während eines Schwachlastbetriebs oder der Startphase der Brennkraftmaschine 3 auf 0 reduziert werden. Ein ungewolltes Auskühlen der Brennkraftmaschine 3 oder eine Verlängerung der Warmlaufphase aufgrund des üblicherweise vorhandenen Kühlmittelmindestdurchsatzes wird somit zuverlässig verhindert.

Zusätzlich kann das Abschaltelement 13 mit einer Druckbegrenzungs- oder Druckminderfunktion kombiniert werden mit der das Auftreten unzulässig hoher Drücke im zweiten Kühlkreislauf 2, die insbesondere den Niedertemperaturwärmeübertrager 10 beschädigen können, unterbunden wird. Ferner ist es denkbar, das mit oder ohne Druckbegrenzungs- bzw. Druckminderfunktion ausgerüstete Abschaltelement 13 mit einer auf der Kühlmittelpumpenseite vorgesehenen Bypassleitung zu kombinieren. Die Ansteuerung des Abschaltelements 13 erfolgt über Signale, die unter Berücksichtigung von Messwerten, die von der Fahrzeugsensorik aufgenommen worden sind, generiert werden.

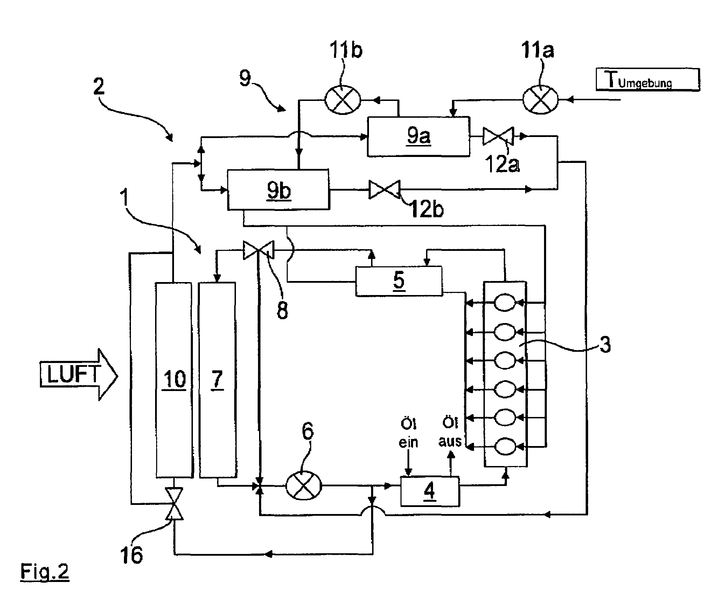

Im Vergleich zur Figur 1 zeigt die Figur 2 ein Kühlsystem, wie es aus dem Stand der Technik bekannt ist. Bei dieser Ausführung eines Kühlsystems befindet sich in Strömungsrichtung des Kühlmittels im zweiten Kühlkreislauf 2 vor dem Niedertemperatunrwärmeübertrager 10 ein Bypassventil 16, mittels dem eine teilweise oder gänzliche Umgehung des Niedertemperaturwärmeübertragers 10 möglich. Auch diese Schaltungsvariante stellt somit eine Möglichkeit dar, eine schnellere Aufheizung der Brennkraftmaschine zu ermöglichen oder ein ungewolltes Auskühlen zu vermeiden. Im Gegensatz zur erfindungsgemäßen technischen Lösung stellt die Kombination eines Bypassventils mit der entsprechenden Leitungsführung einen verhältnismäßig hohen Aufwand dar. Darüber hinaus kann ein als Dreiwegeventil ausgeführtes Bypassventil im Unterschied zu einem sperrenden Ventil als Abschaltelement einen Mindestdurchsatz auf dem Hauptströmungsweg nicht verhindern.

### Bezugszeichenliste

- 1: erster Kühlkreislauf (Hochtemperaturkühlkreislauf)
- 2: zweiter Kühlkreislauf (Niedertemperaturkühlkreislauf)
- 3: Brennkraftmaschine
- 4: Ölwärmetauscher
- 5: Abgaswärmetauscher
- 6: Kühlmittelpumpe
- 7: Hochtemperaturwärmeübertrager
- 8: Motorthermostat
- 9: Ladeluftkühleinheit
a) Ladeluftzwischenkühler
b) Ladelufthauptkühler
- 10: Niedertemperaturwärmeübertrager
- 11: Verdichter
a) Niederdruckverdichter
b) Hochdruckverdichter
- 12 a, b: Thermostatventile
- 13: Abschaltelement
- 16: Bypassventil

## Patentansprüche

1. Kühlsystem einer Brennkraftmaschine (3) mit Ladeluftzufuhr, das über einen ersten (1) und einen zweiten (2) Kühlkreislauf verfügt, von denen der erste Kühlkreislauf (1) auf einem höheren Temperatumiveau als der zweite Kühlkreislauf (2) betrieben wird und bei dem die Ladeluftzufuhr zumindest eine Ladeluftkühleinheit (9) aufweist, die thermisch an den zweiten, einen regelbaren Kühlmitteldurchsatz aufweisenden Kühlkreislauf (2) gekoppelt ist, **dadurch gekennzeichnet, dass** im zweiten Kühlkreislauf (2) wenigstens ein Abschaltelement (13) vorgesehen ist, mit dem während eines Betriebs der Brennkraftmaschine (3) in Abhängigkeit eines Betriebsparameters einer Fahrzeugkomponente der Kühlmitteldurchsatz im zweiten Kühlkreislauf (2) auf Null drosselbar, also abschaltbar ist, wobei die Fahrzeugkomponente ein Abgasnachbehandlungssystem ist.

2. Kühlsystem nach Anspruch 1, **dadurch gekennzeichnet, dass** die Ladeluftzufuhr über einen Niederdruck- (11a) und einen Hochdruckverdichter (11b) und die Ladeluftkühleinheit (9) über einen Zwischen- (9a) und einen Hauptkühler (9b) verfügt, von denen der Zwischenkühler (9a) in Strömungsrichtung der Ladeluft zwischen den Niederdruck- (11 a) und den Hochdruckverdichter (11b) geschaltet ist und der Hauptkühler (9b) dem Hochdruckverdichter (111b) nachgeschaltet ist.

3. Kühlsystem nach Anspruch 1 oder 2, **dadurch gekennzeichnet, dass** der Ladeluftkühleinheit (9) in Strömungsrichtung des Kühlmittels zumindest ein Temperatursensor sowie eine regelungstechnisch mit dem Temperatursensor in Wirkverbindung stehende Armatur nachgeschaltet ist.

4. Kühlsystem nach einem der Ansprüche 1 bis 3, **dadurch gekennzeichnet, dass** das Abschaltelement (13) mit einer Druckminder- oder Druckbegrenzungsfunktion kombiniert oder mit einem Druckminder- oder Druckbegrenzungsventil in Reihe geschaltet wird.

5. Verfahren zum Kühlen einer Brennkraftmaschine (3), die über eine Ladeluftzufuhr mit Ladeluft aufgeladen wird, bei dem ein Kühlmittel in einem ersten (1) und einem zweiten (2) Kühlkreislauf umgewälzt wird, wobei der erste Kühlkreislauf (1) auf einem höheren Temperatumiveau als der zweite Kühlkreislauf (2) betrieben wird und die Ladeluftzufuhr zumindest eine Ladeluftkühleinheit (9) aufweist, die Wärme aus der Ladeluft an den zweiten Kühlkreislauf (2), in dem ein Kühlmitteldurchsatz geregelt wird, übertragen wird, **dadurch gekennzeichnet, dass** während eines Betriebs der Brennkraftmaschine (3) in Abhängigkeit eines Betriebsparameters oder einer Zustandsänderung einer Fahrzeugkomponente und/oder anderer Einflussgrößen der Kühlmitteldurchsatz im zweiten Kühlkreislauf (2) auf Null gedrosselt, also abgeschaltet wird, wobei der Kühlmitteldurchsatz in Abhängigkeit zumindest einer Komponente eines Abgasnachbehandlungssystems abgeschaltet wird.

## Claims

1. A cooling system of an internal combustion engine (3) with charge air intake, which cooling system has a first (1) and a second (2) cooling circuit, of which the first cooling circuit (1) is operated at a higher temperature level than the second cooling circuit (2), and in which cooling system the charge air intake has at least one charge air cooling unit (9) which is coupled thermally to the second cooling circuit (2) which has a controllable coolant throughput, **characterized in that** at least one switch-off element (13) is provided in the second cooling circuit (2), by way of which switch-off element (13) the coolant throughput in the second cooling circuit (2) can be throttled to zero, that is to say can be switched off, during operation of the internal combustion engine (3) in a manner which is dependent on an operating parameter of a vehicle component, the vehicle component being an exhaust gas aftertreatment system.

2. The cooling system according to Claim 1, **characterized in that** the charge air intake has a low pressure compressor (11a) and a high pressure compressor (11b), and the charge air cooling unit (9) has an intermediate cooler (9a) and a main cooler (9b), of which the intermediate cooler (9a) is connected between the low pressure compressor (11a) and the high pressure compressor (11b) in the flow direction of the charge air, and the main cooler (9b) is connected downstream of the high pressure compressor (11b).

3. The cooling system according to Claim 1 or 2, **characterized in that**, in the flow direction of the coolant, at least one temperature sensor and a fitting which is operatively connected in terms of control technology to the temperature sensor are connected downstream of the charge air cooling unit (9).

4. The cooling system according to one of Claims 1 to 3, **characterized in that** the switch-off element (13) is combined with a pressure reducing or pressure limiting function or is connected in series with a pressure reducing or pressure limiting valve.

5. A method for cooling an internal combustion engine (3) which is supercharged with charge air via a charge air intake, in which method a coolant is circulated in a first (1) and a second (2) cooling circuit, the first cooling circuit (1) being operated at a higher temperature level than the second cooling circuit (2), and the charge air intake having at least one charge air cooling unit (9), the heat from the charge air being transferred to the second cooling circuit (2), in which a coolant throughput is controlled, **characterized in that** the coolant throughput in the second cooling circuit (2) is throttled to zero, that is to say is switched off, during operation of the internal combustion engine (3) in a manner which is dependent on an operating parameter or a state change of a vehicle component and/or other influencing variables, the coolant throughput being switched off in a manner which is dependent on at least one component of an exhaust gas aftertreatment system.

## Revendications

1. Système de refroidissement d'un moteur à combustion interne (3) comprenant une alimentation en air de suralimentation qui dispose d'un premier (1) et d'un deuxième (2) circuit de refroidissement, le premier circuit de refroidissement (1) fonctionnant à un niveau de température plus élevé que le deuxième circuit de refroidissement (2) et l'alimentation en air de suralimentation présentant au moins une unité de refroidissement d'air de suralimentation (9) qui est accouplée thermiquement au deuxième circuit de refroidissement (2) présentant un débit de fluide de refroidissement réglable, **caractérisé en ce que** dans le deuxième circuit de refroidissement (2) est prévu au moins un élément de coupure (13) avec lequel, pendant un fonctionnement du moteur à combustion interne (3), en fonction d'un paramètre de fonctionnement d'un composant du véhicule, le débit de fluide de refroidissement dans le deuxième circuit de refroidissement (2) peut être étranglé à zéro, c'est-à-dire coupé, le composant du véhicule étant un système de post-traitement de gaz d'échappement.

2. Système de refroidissement selon la revendication 1, **caractérisé en ce que** l'alimentation en air de suralimentation dispose d'un compresseur basse pression (11a) et d'un compresseur haute pression (11b) et l'unité de refroidissement d'air de suralimentation (9) dispose d'un refroidisseur intermédiaire (9a) et d'un refroidisseur principal 9b), le refroidisseur intermédiaire (9a) étant monté dans le sens de l'écoulement de l'air de suralimentation entre le compresseur basse pression (11a) et le compresseur haute pression (11b) et le refroidisseur principal (9b) étant monté en aval du compresseur haute pression (11b).

3. Système de refroidissement selon la revendication 1 ou 2, **caractérisé en ce qu'**en aval de l'unité de refroidissement d'air de suralimentation (9), dans le sens de l'écoulement du fluide de refroidissement, sont montés au moins un capteur de température ainsi qu'une armature en liaison fonctionnelle par une technique de régulation avec le capteur de température.

4. Système de refroidissement selon l'une quelconque des revendications 1 à 3, **caractérisé en ce que** l'élément de coupure (13) est combiné à une fonction de réduction ou de limitation de la pression ou est monté en série avec une soupape de réduction ou de limitation de la pression.

5. Procédé pour refroidir un moteur à combustion interne (3) qui est suralimenté avec de l'air de suralimentation par le biais d'une alimentation en air de suralimentation, dans lequel un fluide de refroidissement est mis en circulation dans un premier circuit de refroidissement (1) et un deuxième circuit de refroidissement (2), le premier circuit de refroidissement (1) fonctionnant à un niveau de température plus élevé que le deuxième circuit de refroidissement (2) et l'alimentation en air de suralimentation présentant au moins une unité de refroidissement d'air de suralimentation (9), la chaleur provenant de l'air de suralimentation étant transférée au deuxième circuit de refroidissement (2) dans lequel un débit de fluide de refroidissement est régulé, **caractérisé en ce que** pendant un fonctionnement du moteur à combustion interne (3), en fonction d'un paramètre de fonctionnement ou d'une variation d'état d'un composant du véhicule et/ou d'autres grandeurs d'influence, le débit de fluide de refroidissement dans le deuxième circuit de refroidissement (2) est étranglé à zéro, c'est-à-dire coupé, le débit de fluide de refroidissement étant coupé en fonction d'au moins un composant d'un système de post-traitement de gaz d'échappement.
